# EUROPEAN PATENT APPLICATION

(11) **EP 2 453 366 A1**
(43) Date of publication of application: **16.05.2012**
(21) Application number: 10014540.8
(22) Date of filing: 12.11.2010
(51) Int. Cl.: G06F 17/30

(54) **Data storage management**

(71) Applicant: Silverstring Limited, Bloxham Banbury Oxfordshire OX15 4FF (GB)
(72) Inventor: Bates, Richard, Napton-on-the-hill Warwickshire CV47 8NS (GB); De Giorgio, Ronnie, Nottingham NG2 6PA (GB)
(74) Representative: Downing, Michael Philip

(57) **Abstract**

Techniques of "data deduplication" have been developed to reduce data storage needs by eliminating redundant copies of data. Deduplication is able to reduce the required storage capacity since only the unique data is stored. This has obvious cost benefits for the organisation, but deduplication techniques have a significant cost and therefore a business case must be prepared for them. However, the information essential for the preparation of that business case is the degree by which demand for storage space is reduced - information that only becomes available after implementation. We describe a low-cost technical means of estimating the benefits obtainable from implementing a deduplication appliance in advance of actually doing so. We propose that the data gathered as part of a routine backup or archival system (which we will refer to as a "data management system") be used as the information source, and that an estimating algorithm be applied to this data in order to create an estimate of the benefits obtainable from implementing a deduplication system. Such data, which may be present in a structured database, will contain the basic information of file names, locations, sizes and dates, and can be queried off-line to identify possible or likely candidates for deduplication and estimate the file storage space savings obtainable.

## Description

One problem in the field of data storage is that of duplication. As a simple example, a typical corporate fileserver might contain 100 Instances of the same one megabyte (MB) file as a result of the file being saved by multiple recipients to their home folders or other storage locations, If the fileserver is backed up or archived, all 100 instances are saved, requiring 100 MB storage space for only 1MB of information.

Techniques of "data deduplication" have therefore been developed. These are specialized data compression techniques for eliminating coarse-grained redundant data, typically to improve storage utilization. In the deduplication process, duplicate data is deleted, leaving only one copy of the data to be stored together with references to the unique copy of that data. Deduplication is able to reduce the required storage capacity since only the unique data is stored. This has obvious cost benefits for the organisation.

Different applications and data types naturally have different levels of data redundancy. Backup applications generally benefit the most from de-duplication due to the nature of repeated full backups of an existing file system.

### SUMMARY OF THE INVENTION

The degree of specialisation In deduplication techniques is reflected in their cost. For a typical organisation of any significant size, the cost of acquiring and applying a deduplication appliance in their storage system is non-trivial. This presents a significant barrier to implementation of such systems; if a business case for the deduplication system cannot be presented then the capital expenditure for acquisition and implementation will not be authorised. However, the information essential for the preparation of that business case is the degree by which demand for storage space is reduced - information that only becomes available after implementation.

Thus, there exists a need for a low-cost technical means of estimating the benefits obtainable from implementing a deduplication appliance in advance of actually doing so, in order to create the information necessary to make the decision as to whether to proceed. Clearly, a deduplication algorithm could be applied to the existing data set and the results obtained. However, this is tantamount to actual implementation, and requires access to the implementation routines. It must also be done on the live system. Thus, the cost of this approach is likely to be unjustifiable.

The present invention provides such a means, but avoids this problem. Instead, the present invention proposes that data gathered as part of a routine backup or archival system (which we will refer to as a "data management system") be used as the information source, and that an estimating algorithm be applied to this data in order to create an estimate of the benefits obtainable from implementing a deduplication system.

Such data, which may be present in a structured database, will contain the basic information of file names, locations, sizes and dates, and can be queried off-line to identify possible or likely candidates for deduplicatlon and estimate the storage space savings obtainable. It should be noted that the algorithm run on the database need not be 100% rigorous in identifying duplicated files, since it is not the algorithm that will actually be used as part of the deduplication process (if one is instigated). Thus, If a small number of duplicate files are not identified, or if a small number of non-duplicate files are identified as being duplicates, then this is not a problem since the algorithm will not be used to delete any actual files. Thus, the algorithm can be significantly simpler than that which is used for any actual deduplication process that is implemented.

### BRIEF DESCRIPTION OF THE DRAWINGS

An embodiment of the present invention will now be described by way of example, with reference to the accompanying figures in which;
Figure 1 shows an overview of the pattern matching logic;
Figure 2 shows the steps in creating a deduplication estimate; and
Figure 3 shows sample results.

### DETAILED DESCRIPTION OF THE EMBODIMENTS

There now exist a number of data storage management suites, principally the TIvoli Storage Manager (TSM) suite by IBM. These aim to track and manage the retention of data from substantial organisations, to assist with the retrieval of previously archived data, and to allow for backup and disaster recovery.

This invention will be described in relation to a TSM system, but this Is for convenience only and does not indicate that the invention is exclusively applicable to TSM systems. To the contrary, it is applicable to any backup system that creates an accessible database of the files being backed up.

At present, there are many ways to optimize the storage utilization, such as:

### File-Level Data deduplication

This examines all of the data on the file level and eliminates redundant copies of a file that have matched characteristics, storing only one Instance of the file, irrespective of TSM Backup version or originating source.

### Block-Level Data deduplication

This examines all of the data at the block level (i.e, sections of data within individual files) and eliminates redundant blocks, irrespective of file name or TSM Backup version or originating source. It will accommodate entire files that are redundant and can be optimized, however, unlike File Level Data deduplication it will also optimize the redundant blocks of data that are present in many slightly different versions of the same file that exist.

The storage optimization tools produce results, however, it remains difficult to estimate what level of optimization, if any can be achieved before applying a storage optimization technology. For example, if a deduplication solution was purchased and the sizing of the solution was either under or over estimated, the solution would not fulfil the original requirements and would most likely have further cost implications. The present invention is designed to provide that estimate based on detailed knowledge of the data in the environment so that a more appropriate solution can be deployed.

The present invention employs a calculation method that is based on a combination of file-level data deduplication technology and detailed file information gathered via the existing TSM system, such as (for example) by our Predatar^{™} Data Tracker^{™} technology.

For scalability and performance reasons, we Intend this report to be be an offline report. However, as systems develop and improve in performance, it may be possible to implement this in an online manner - i.e. continuously calculating the benefits available from deduplication.

### The General concept

The deduplicatlon Estimator will be primarily based upon file name, file size and file backup dates as recorded within the TSM Database.

For example, a file named "file.txt" is created on a TSM Client machine which has a size of 10MB. The TSM Server stores the first backup of this file within the TSM Infrastructure, which will be referred herein as "Version 1" or the "Base Version" The file is then modified at a later date and the new size of the file "file.txt" Is 11MB. This file is now backed up to the TSM Server and becomes the newest version within the TSM Infrastructure and the previous version of the file now becomes the oldest version of the file within the TSM Infrastructure. There are now two versions of the file "file.txt" managed within the TSM Infrastructure totalling 21MB of storage pool usage, the first version (the version with the oldest backup date) at 10MB in size and the second version (the version with the newest backup date) at 11MB in size. The difference in size, from here on will be known as the "delta". The delta between the two versions is 1MB.

Generally speaking, a newer version of a data file is typically the same size as the first version or larger. Very rarely, the latest version of the file is smaller than its predecessor version, however, In the event that this situation arises, the delta between the two versions will be rounded to 0MB.

Typically, the data within the newer version of the file, often referred to as the "Delta Version" of the file does not contain that much change if any change at all, from the first version of the file, often referred to as the "Base Version" of the file.

Applying this logic and knowledge, the deduplication Estimator can provide an educated estimation that the storage utilization of the file "file.txt" can be optimized into 11MB of total storage utilization within a TSM Infrastructure.

The calculation would be as follows for the above example "file.txt", where the notation (Version *x*) indicates the file size of the relevant version of the file:
(Version 2-Version 1)
+ (Version 1)
= Optimised Storage Requirement

Using a more sophisticated example, where there Is more than one version of the data file involved, This pattern matching logic adheres to the calculation noted below:
(Version 4 - Version 1)
+ (Version 3 - Version 1)
+ (Version 2-Version 1)
+ Version 1
= Optimised Storage Requirement

The above examples become even more sophisticated where there is more than one version of the data file Involved and matches of those versions are found across more than one TSM Client Node. This pattern matching logic adheres to the calculation noted below:
TSM Node 1 Version Match TSM Node2 Version Match
(Version 4 - Version 1) (Version 2 - Version 1)
+ (Version 3 - Version 1)
+ (Version 2 - Version 1)
+ Version 1
= Optimised Storage Delta Storage Requirement for Requirement for TSM Node 1 TSM Node 2
Total = Overall Optimised Storage Requirement

It should be noted that this is just one of a number of possible algorithms for estimating the available storage space saving though the application of deduplication techniques. Other such algorithms may be employed without departing from the scope of the present invention.

There are to be three levels of file pattern matching algorithms used within our deduplication estimator at this time: Global Path Pattern Matching, Local Path Pattern Matching and File Name Only Pattern Matching. All pattern matching algorithms will adhere to a unique concept called a "File Group", File Groups will consist of pattern matched files, at all three pattern matching algorithm levels. All three pattern matching algorithms will at least pattern match the File Name and File Byte Size.

Global Path pattern matching File Groups will consist of pattern matched files where the Node Name, the Directory Name and File Name are pattern matched and the version with the oldest backup date is considered the "File Base Version". It is important to note that pattern matched files that are associated with a File Group In this algorithm will be associated with only one TSM Node. This algorithm will produce deduplication estimates at the node level.

Local Path pattern matching File Groups will consist of pattern matched files where the Directory Name and File Name are pattern matched and the version with the oldest backup date Is considered the "File Base Version". It is important to note that pattern matched files that are associated with a File Group in this algorithm may be associated with multiple TSM Nodes. This algorithm will produce deduplication estimates at the file and directory level.

File Name Only Path pattern matching File Groups will consist of pattern matched files where the File Names are pattern matched and the version with the oldest backup date is considered the "File Base Version". It Is important to note that pattern matched files that are associated with a File Group in this algorithm may be associated with multiple TSM Nodes and / or directories. This algorithm will produce deduplication estimates at the file level and are expected to yield the most attractive deduplication results.

Worked examples of the three levels of file pattern matching algorithms used within the PDT deduplication Estimator can be seen in the following tables. It is important to note that these tables include example data.

Table 1 presents sample results based on the "global path" pattern matching algorithm. Thus, for example, several instances of "file.txt" have been found, all in a directory called "dir1", of which there are instances on node1, node2 and node3. File group 1 consists of the instances of file.txt located in dir1 on node1 and includes the instances backed up on 1, 3, 7, 9 and 10 March. The file size has changed on each backup. Thus, the earliest instance, that of 1 March, is nominated as the base file version and is to be kept. Its file size of 105,906, 176 bytes is therefore counted in full as the storage size needed after deduplication and appears in the "Optimised Storage Usage" column.

The next version of file.txt in dir1 on node1, that of 3 March, Is a little larger. Thus, the difference In size between it and the base file version of 1,048,576 bytes appears in the "Optimised Storage Usage" column. Likewise, the third version, that of 7 March, is larger still and the difference between it and the base version of 1 March, 2,097,152 bytes, is placed in the "Optimised Storage Usage" column.

The next version, that of 9 March, is smaller. Here, we assume that sections have been deleted and therefore estimate the additional storage space needed after deduplicatlon above and beyond that needed for the earlier versions, will be zero. This assumption may not be correct; the file may include additional sections as well as significant deletions, in which case some space will be needed. However, for estimating purposes this can be ignored. Alternatively, a revised calculation logic could allow for this. For example, the user could be permitted to set an additional percentage estimated change rate for the base contents of the file, to cater for changes, deletions, insertions. This could then allow a more accurate deduplication calculation.

**Table 1 - Global Path**

| File Group | Node Name | Directory Name | File Name | File Byte Size | Backup Date | Change Delta Bytes | Optimised Stg Usage |
|---|---|---|---|---|---|---|---|
| 1 | node1 | /dir1 | file.txt | 110,100,480 | 10-Mar-10 | 4,194,304 | 4,194,304 |
| 1 | node1 | /dir1 | file.txt | 103,809,024 | 9-Mar-10 | 0 | 0 |
| 1 | node1 | /dir1 | file.txt | 108,003,328 | 7-Mar-10 | 2,097,152 | 2,097,152 |
| 1 | node1 | /dir1 | file.txt | 106,954,752 | 3-Mar-10 | 1,048,576 | 1,048,576 |
| 1 | node1 | /dir1 | file.txt | 105,906,176 | 1-Mar-10 | n/a | 105,906,176 |
| | | | | | | | |
| 2 | node2 | /dir1 | file.txt | 214,958,080 | 28-Feb-10 | 109,051,904 | 109,051,904 |
| 2 | node2 | /dir1 | file.txt | 212,860,928 | 14-Feb-10 | 106,954,752 | 106,954,752 |
| 2 | node2 | /dir1 | file.txt | 211,812,352 | 13-Feb-10 | 105,906,176 | 105,906,176 |
| 2 | node2 | /dir1 | file.txt | 105,906,176 | 10-Feb-10 | n/a | 105,906,176 |
| | | | | | | | |
| 3 | node3 | /dir1 | file.txt | 315,621,376 | 1-Jan-10 | n/a | 315,621,376 |
| | | | | | | | |
| 4 | node1 | /dir2 | file.txt | 1,054,867,456 | 31-Jul-10 | 2,097,152 | 2,097,152 |
| 4 | node1 | /dir2 | file.txt | 1,053,818,880 | 28-Jul-10 | 1,048,576 | 1,048,576 |
| 4 | node1 | /dir2 | file.txt | 1,052,770,304 | 14-Jul-10 | n/a | 1,052,770,304 |
| | | | | | | | |
| 5 | node2 | /dir2 | file.txt | 1,052,770,304 | 16-3un-10 | n/a | 1,052,770,304 |
| | | | | | | | |
| 6 | node3 | /dir2 | file.txt | 1,050,673,152 | 17-Aug-09 | 2,097,152 | 2,097,152 |
| 6 | node3 | /dir2 | file.txt | 1,049,624,576 | 14-Aug-09 | 1,048,576 | 1,048,576 |
| 6 | node3 | /dir2 | file.txt | 1,048,576,000 | 11-Aug-09 | n/a | 1,048,576,000 |
| | | | | | | | |
| 7 | node4 | /dir3 | file.txt | 1,050,673,152 | 18-Jun-09 | 2,097,152 | 2,097,152 |
| 7 | node4 | /dir3 | file.txt | 1,049,624,576 | 16-Jun-09 | 1,048,576 | 1,048,576 |
| 7 | node4 | /dir3 | file.txt | 1,048,576,000 | 14-3un-09 | n/a | 1,048,576,000 |
| 8 | node1 | /dir1 | file1.txt | 108,003,328 | 15-Aug-09 | 2,097,152 | 2,097,152 |
| 8 | node1 | /dir1 | file1.txt | 106,954,752 | 14-Aug-09 | 1,048,576 | 1,048,576 |
| | | | | | | | |
| 8 | node1 | /dir1 | file1.txt | 105,906,176 | 11-Aug-09 | n/a | 105,906,176 |
| 9 | node2 | /dir1 | file1.txt | 214,958,080 | 31-Jul-09 | 4,194,304 | 4,194,304 |
| 9 | node2 | /dir1 | file1.txt | 212,860,928 | 24-Jul-09 | 2,097,152 | 2,097,152 |
| 9 | node2 | /dir1 | file1.txt | 211,812,352 | 21-Jul-09 | 1,048,576 | 1,048,576 |
| 9 | node2 | /dir1 | file1.txt | 210,763,776 | 1-jul-09 | n/a | 210,763,776 |
| | | | | | | | |
| 10 | node3 | /dir1 | file1.txt | 210,763,776 | 30-Jun-09 | n/a | 210,763,776 |
| | | | | | | | |
| 11 | node1 | /dir2 | file1.txt | 1,054,867,456 | 30-May-09 | 2,097,152 | 2,097,152 |
| 11 | node1 | /dir2 | file1.txt | 1,053,818,880 | 28-May-09 | 1,048,576 | 1,048,576 |
| 11 | node1 | /dir2 | file1.txt | 1,052,770,304 | 27-May-09 | n/a | 1,052,770,304 |
| | | | | | | | |
| 12 | node2 | /dir2 | file1.txt | 1,052,770,304 | 28-May-09 | n/a | 1,052,770,304 |
| | | | | | | | |
| 13 | node3 | /dir2 | file1.txt | 1,050,673,152 | 18-Apr-09 | -2097152 | -2097152 |
| 13 | node3 | /dir2 | file1.txt | 1,049,624,576 | 17-Apr-09 | -3145728 | -3145728 |
| 13 | node3 | /dir2 | file1.txt | 1,052,770,304 | 16-Apr-09 | n/a | 1,052,770,304 |

**Table 2 - Local Path**

| File Group | Node Name | Directory Name | File Name | File Byte Size | Backup Date | Change Delta Bytes | Optimised Stg Usage |
|---|---|---|---|---|---|---|---|
| 1 | node1 | /dir1 | file1.txt | 110,100,480 | 10-Mar-10 | 4194304 | 4,194,304 |
| 1 | node1 | /dir1 | file1.txt | 103,809,024 | 9-Mar-10 | 0 | 0 |
| 1 | node1 | /dir1 | file.txt | 108,003,328 | 7-Mar-10 | 2097152 | 2,097,152 |
| 1 | node1 | /dir1 | file1.txt | 106,954,752 | 3-Mar-10 | 1048576 | 1,048,576 |
| 1 | node1 | /dir1 | file.txt | 105,906,176 | 1-Mar-10 | 0 | 0 |
| 1 | node2 | /dir1 | file.txt | 214,958,080 | 28-Feb-10 | 109051904 | 109,051,904 |
| 1 | node2 | /dir1 | file.txt | 212,860,928 | 14-Feb-10 | 106954752 | 106,954,752 |
| 1 | node2 | /dir1 | file1.txt | 211,812,352 | 13-Feb-10 | 105906176 | 105,906,176 |
| 1 | node2 | /dir1 | file.txt | 105,906,176 | 10-Feb-10 | n/a | 105,906,176 |
| | | | | | | | |
| 2 | node3 | /dir1 | file.txt | 315,621,376 | 1-Jan-10 | n/a | 315,621,376 |
| | | | | | | | |
| 3 | node1 | /dir2 | file.txt | 1,054,867,456 | 31-Jul-10 | 2097152 | 2,097,152 |
| 3 | node1 | /dir2 | file.txt | 1,053,818,880 | 28-Jul-10 | 1048576 | 1,048,576 |
| 3 | node1 | /dir2 | file.txt | 1,052,770,304 | 14-Jul-10 | 0 | 0 |
| 3 | node2 | /dir2 | file.txt | 1,052,770,304 | 16-Jun-10 | n/a | 1,052,770,304 |
| | | | | | | | |
| 4 | node3 | /dir2 | file.txt | 1,050,673,152 | 17-Aug-09 | 2097152 | 2,097,152 |
| 4 | node3 | /dir2 | file.txt | 1,049,624,576 | 14-Aug-09 | 1048576 | 1,048,576 |
| 4 | node3 | /dir2 | file.txt | 1,048,576,000 | 11-Aug-09 | n/a | 1,048,576,000 |
| | | | | | | | |
| 5 | node4 | /dir3 | file.txt | 1,050,673,152 | 18-Jun-09 | 2097152 | 2,097,152 |
| 5 | node4 | /dir3 | file.txt | 1,049,624,576 | 16-Jun-09 | 1048576 | 1,048,576 |
| 5 | node4 | /dir3 | file.txt | 1,048,576,000 | 14-Jun-09 | n/a | 1,048,576,000 |
| | | | | | | | |
| 6 | node1 | /dir1 | file1.txt | 108,003,328 | 15-Aug-09 | 2097152 | 2,097,152 |
| 6 | node1 | /dir1 | file1.txt | 106,954,752 | 14-Aug-09 | 1048576 | 1,048,576 |
| 6 | node1 | /dir1 | file1.txt | 105,906,176 | 11-Aug-09 | n/a | 105,906,176 |
| | | | | | | | |
| 7 | node2 | /dir1 | file1.txt | 214,958,080 | 31-Jul-09 | 4194304 | 4,194,304 |
| 7 | node2 | /dir1 | file1.txt | 212,860,928 | 24-Jul-09 | 2097152 | 2,097,152 |
| 7 | node2 | /dir1 | file1.txt | 211,812,352 | 21-Jul-09 | 1048576 | 1,048,576 |
| 7 | node2 | /dir1 | file1.txt | 210,763,776 | 1-Jul-09 | 0 | 0 |
| 7 | node3 | /dir1 | file1.txt | 210,763,776 | 30-Jun-09 | n/a | 210,763,776 |
| | | | | | | | |
| 8 | node1 | /dir2 | file1.txt | 1,054,867,456 | 30-May-09 | 2097152 | 2,097,152 |
| 8 | node1 | /dir2 | file1.txt | 1,053,818,880 | 28-May-09 | 1048576 | 1,048,576 |
| 8 | node1 | /dir2 | file1.txt | 1,052,770,304 | 27-May-09 | 0 | 0 |
| 8 | node2 | /dir2 | file1.txt | 1,052,770,304 | 28-May-09 | 0 | 0 |
| 8 | node3 | /dir2 | file1.txt | 1,050,673,152 | 18-Apr-09 | 0 | 0 |
| 8 | node3 | /dir2 | file1.txt | 1,049,624,576 | 17-Apr-09 | 0 | 0 |
| 8 | node3 | /dir2 | file1.txt | 1,052,770,304 | 16-Apr-09 | n/a | 1,052,770,304 |

**Table 3 - File Name Only**

| File Group | Node Name | Directory Name | File Name | File Byte Size | Backup Date | Change Delta Bytes | Optimised Stg Usage |
|---|---|---|---|---|---|---|---|
| 1 | node1 | /dir1 | file.txt | 110,100,480 | 10-Mar-10 | 4,194,304 | 4,194,304 |
| 1 | node1 | /dir1 | file.txt | 103,809,024 | 09-Mar-10 | 0 | 0 |
| 1 | node1 | /dir1 | file.txt | 108,003,328 | 07-Mar-10 | 2,097,152 | 2,097,152 |
| 1 | node1 | /dir1 | file.txt | 106,954,752 | 03-Mar-10 | 1,048,576 | 1,048,576 |
| 1 | node1 | /dir1 | file.txt | 105,906,176 | 01-Mar-10 | 0 | 0 |
| 1 | node2 | /dir1 | file.txt | 214,958,080 | 28-Feb-10 | 109,051,904 | 109,051,904 |
| 1 | node2 | /dir1 | file.txt | 212,860,928 | 14-Feb-10 | 106,954,752 | 106,954,752 |
| 1 | node2 | /dir1 | file.txt | 211,812,352 | 13-Feb-10 | 105,906,176 | 105,906,176 |
| 1 | node2 | /dir1 | file.txt | 105,906,176 | 10-Feb-10 | n/a | 105,906,176 |
| | | | | | | | |
| 2 | node3 | /dir1 | file.txt | 315,621,376 | 01-Jan-10 | n/a | 315,621,376 |
| | | | | | | | |
| 3 | node1 | /dir2 | file.txt | 1,054,867,456 | 31-Jul-10 | 2,097,152 | 2,097,152 |
| 3 | node1 | /dir2 | file.txt | 1,053,818,880 | 28-Jul-10 | 1,048,576 | 1,048,576 |
| 3 | node1 | /dir2 | file.txt | 1,052,770,304 | 14-Jul-10 | 0 | 0 |
| 3 | node2 | /dir2 | file.txt | 1,052,770,304 | 16-Jun-10 | n/a | 1,052,770,304 |
| 4 | node3 | /dir2 | file.txt | 1,050,673,152 | 17-Aug-09 | 2,097,152 | 2,097,152 |
| 4 | node3 | /dir2 | file.txt | 1,049,624,576 | 14-Aug-09 | 1,048,576 | 1,048,576 |
| 4 | node3 | /dir2 | file.txt | 1,048,576,000 | 11-Aug-09 | 0 | 0 |
| 4 | node4 | /dir3 | file.txt | 1,050,673,152 | 18-Jun-09 | 2,097,152 | 2,097,152 |
| 4 | node4 | /dir3 | file.txt | 1,049,624,576 | 16-Jun-09 | 1,048,576 | 1,048,576 |
| 4 | node4 | /dir3 | file.txt | 1,048,576,000 | 14-Jun-09 | n/a | 1,048,576,000 |
| | | | | | | | |
| 5 | node1 | /dir1 | file1.txt | 108,003,328 | 15-Aug-09 | 2,097,152 | 2,097,152 |
| 5 | node1 | /dir1 | file1.txt | 106,954,752 | 14-Aug-09 | 1,048,576 | 1,048,576 |
| 5 | node1 | /dir1 | file1.txt | 105,906,176 | 11-Aug-09 | n/a | 105,906,176 |
| | | | | | | | |
| 6 | node2 | /dir1 | file1.txt | 214,958,080 | 31-Jul-09 | 4,194,304 | 4,194,304 |
| 6 | node2 | /dir1 | file1.txt | 212,860,928 | 24-Jul-09 | 2,097,152 | 2,097,152 |
| 6 | node2 | /dir1 | file1.txt | 211,812,352 | 21-Jul-09 | 1,048,576 | 1,048,576 |
| 6 | node2 | /dir1 | file1.txt | 210,763,776 | 01-Jul-09 | 0 | 0 |
| 6 | node3 | /dir1 | file1.txt | 210,763,776 | 30-Jun-09 | n/a | 210,763,776 |
| | | | | | | | |
| 7 | node1 | /dir2 | file1.txt | 1,054,867,456 | 30-May-09 | 2,097,152 | 2,097,152 |
| 7 | node1 | /dir2 | file1.txt | 1,053,818,880 | 28-May-09 | 1,048,576 | 1,048,576 |
| 7 | node1 | /dir2 | file1.txt | 1,052,770,304 | 27-May-09 | 0 | 0 |
| 7 | node2 | /dir2 | file1.txt | 1,052,770,304 | 28-May-09 | 0 | 0 |
| 7 | node3 | /dir2 | file1.txt | 1,050,673,152 | 18-Apr-09 | 0 | 0 |
| 7 | node3 | /dir2 | file1.txt | 1,049,624,576 | 17-Apr-09 | 0 | 0 |
| 7 | node3 | /dir2 | file1.txt | 1,052,770,304 | 16-Apr-09 | n/a | 1,052,770,304 |

This process is then repeated for the instances on node2, the trivial case of the single instance on node3, and the files on other nodes and in other directories. Thus, files which have the same name, directory, and location (node) are considered to be duplicates and the necessary storage after deduplication is estimated as being only that for the base file version and the additional size of later versions. In this case, the total size of the files is 20,857,225,216 bytes (19,891Mb), and the estimated storage space needed after deduplication is 8,762,949,632 bytes (8357 Mb), giving a DeDuplication Ratio of 2.4 to 1.

Table 2 shows the approach made using the "local path" pattern matching logic. Under this approach, only the local path matters, and files which have the same name and local path but which are located on different nodes are considered to be duplicates. In other words, if a file called file.txt exists in a directory called dir1 on both node1 and node2, then the two files are considered likely to have been copied from one node to the other.

Thus, the base version of dir1\file.txt is the earliest of all the instances of file.txt that are located in a directory called dir1 on any node. The size of this file is included in full in the "Optimised Storage Usage" column, together with the additional size of other versions above and beyond this size, or zero if a version is smaller. This is then repeated for each file. On this basis, the total size of the files is (still) 20,857,225,216 bytes (19,891Mb), but the estimated storage space needed after deduplication is now 5,293,211,648 bytes (5048 Mb), giving a DeDuplicabion Ratio of 3.9 to 1.

Finally, table 3 shows the result of applying a "file name only" approach to the same example. In this approach, all files with the same name are regarded as being potential duplicates regardless of their directory or node location. Some differentiation is applied; for example there Is a cluster of "file.txt" instances around February and March with a similar file size, and a cluster in July with a markedly different size. These are treated as different (non-duplicate) files on the basis that the combined variation in date and size is outside a preset margin. Such a difference could be calculated by summing the differences in file size and date, each subject to a scaling factor, and assuming that files are unrelated if the sum is greater than a threshold. On this basis, the total size of the files is (still) 20,857,225,216 bytes (19,891Mb), but the estimated storage space needed after deduplication is now 4,244,635,648 bytes (4048 Mb), giving a DeDuplication Ratio of 4.9 to 1.

Thus, the different approaches give different estimates of the storage space required after deduplication and (therefore) of the deduplicatlon ratio. This Is to be expected, given that the different approaches have tighter or looser definitions of what constitutes a potential duplicate file. The results of all the different approaches can be presented to a user, allowing an informed choice to be made.

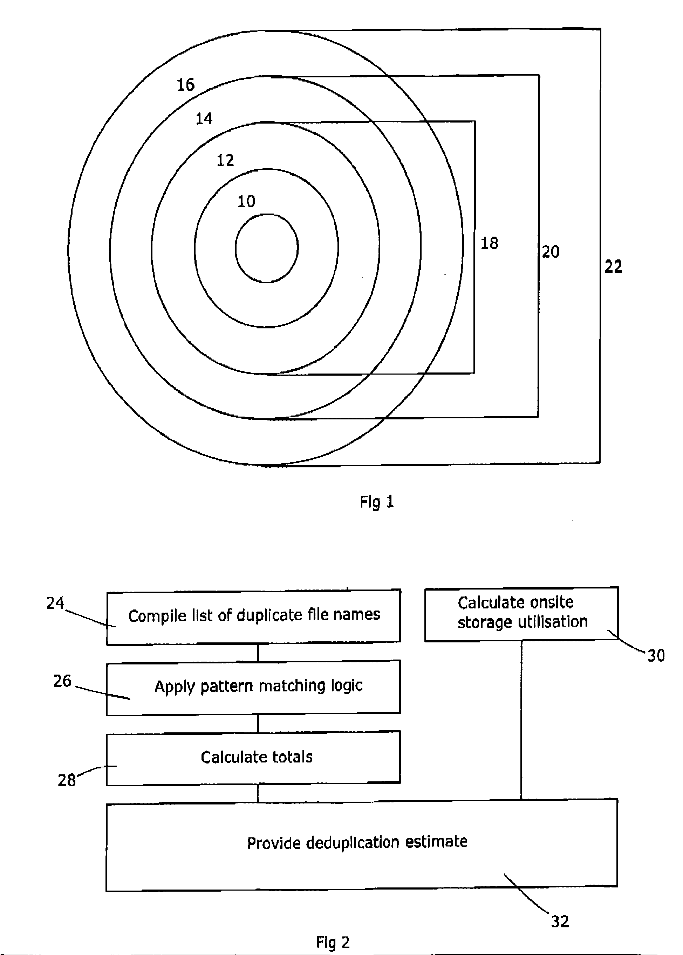

Figure 1 shows an overview of the pattern matching methods available. Different attributes of the file include the file size 10, the file name 12, the directory name 14 and the node name (storage location) 16. The degree of similarity between these attributes for two different files indicates a likelihood of the files being duplicates. Clearly, if all four are identical then the "two" files are in fact the same file. If only one attribute is different, then the two files are likely to be either duplicates or different versions of the file,

Thus, different levels of matching can be defined. A "file name only" path group 18 can look for files with the same file name 12, and will find the widest range of potential duplicates. A "local path file group" 20 can look for files with the same file name 12 and directory name 14; this will find duplicates across different nodes 16 but may miss potential duplicates that are in different directories in the same node. Finally, a "global path file group" 22 looks for files with the same file name 12, directory name 14 and node name 16 and will essentially be limited to finding different versions of the same file from different backups taken at different times.

### The Pattern Matching Overview

It is important to note that this document demonstrates examples where the Backup Data is referenced and displayed, however, the same algorithms and functionality must be adhered and applied to Archive Data as well, where the Backup Date variable is replaced with the Archive Date variable.

### Data Source

The deduplication Estimator will reference the data in the ReportPDTBackup and ReportPDTArchive, which are tables that both exist within our Predatar™ DataTracker™ database. The following data columns will be referenced at a minimum; other columns from this and other tables may be required:
- TSMNodeName
- Size
- File
- BackupDate / ArchiveDate
- FileSpaceName

The reports generated will be based on the data contained within the Predatar™ DataTracker™ database as well as the Predatar™ database which will provide insight as to which TSM Client is associated with which TSM Server.

### The Rule Pattern Matching Process

The deduplication estimator will pattern match files based on specific criteria gathered from the Predatar™ DataTracker™ Database and then apply the Predatar™ deduplication Estimator algorithm to the pattern matched files.

Files will be considered for deduplication estimation when at least the minimum criteria is met, where, the File Names and the File Byte Sizes of the Base Versions of a backup file (when dealing with file name matches across multiple TSM Nodes) are the same.

### The Predatar™ Deduplication Processing Logic

The deduplication Estimator will pattern match files based on specific criteria gathered from the Predatar™ DataTracker™ Database and then apply the selected Predatar™ deduplication estimator algorithm to the pattern matched files.

Whilst the pattern matching process is being executed, a calculation of the onsite storage utilization for all backup data will be calculated for the entire estate.

Figure 2 shows the pattern matching processing. A list of duplicate file names is compiled at step 24. This should be sufficiently detailed to allow for the type of pattern matching logic that is to be applied. Thus, for a global path pattern matching logic, the list is compiled across the entire TSM estate, for each TSM node. For a local path pattern matching logic, a list of duplicate directory & file names is compiled across an entire TSM estate. For a "file name only" pattern matching logic, a simple list of duplicate file names is compiled across the entire TSM estate. Of course, in any of these cases (or in the case of an alternative pattern matching logic), the list could include additional details beyond the minima required for the pattern matching process, and this would allow other pattern matching logics to be applied subsequently for comparison purposes.

The relevant pattern matching logic is then applied at step 26, which may be a global path logic, Local Path Logic, "File Name Only" Logic, or other form of pattern matching logic. Totals of potential duplicated storage space can then be calculated at step 28.

Meanwhile, the total onsite storage utilisation for all backup data can be calculated at step 30. This can be done prior to, subsequent to, between, or simultaneously (in parallel) with steps 24 to 28. With this information and the totals calculated at step 28, a deduplication estimate can then be presented (step 32). This can display a calculated onsite storage utilisation, a total amount of space allocated to duplicate files, and the space used by duplicate files as a proportion or percentage of the total space available or the total space used. Such information can then be used to decide whether a Investment In a deduplication system is worthwhile.

To launch the deduplication estimator reporting module from the Predatar™ main page, it is envisaged that an authorized user will simple click on a suitable command to initiate the off-line process.

All reports will ideally include a reference chart outlining:
- *Onsite TSM Storage Utilized -* a calculation of the total backup data as gathered in the data collection process
- *Post Deduplication Storage Utilized* - calculated based on the algorithm results obtained.
- *Projected Savings* - calculated at the portal level where the "Post Deduplication Storage Utilized" field will be taken away from the "Onsite TSM Storage Utilized" field.
- *Duplication Factor Estimate* - calculated at the portal level where the "Onsite TSM Storage Utilized" field will be divided by the "Post deduplication Storage Utilized" field.

The initial report can be displayed will be for all TSM Servers based on the Backup Data View. Alternate reporting views could be offered, such as by selecting a specific TSM Server and/or by selecting the Archive Data View.

By clicking on any of the charts provided in the initial report, the next and final level of reporting will be displayed which will be at the TSM Node level. The same reporting columns will be shown as noted above, together with additional columns "TSM Node Name" and "TSM server name". The report will display the data deduplication estimates at the TSM Node level and will be initially sorted from the highest deduplication factor to the lowest deduplication factor.

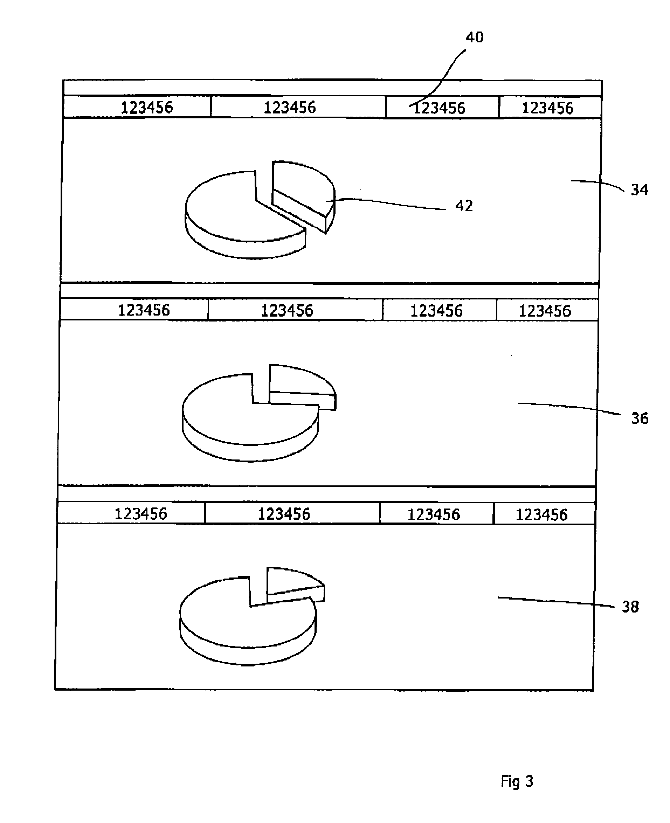

Figure 3 shows an example Data Backup View Report. This presents estimates based on the three pattern matching logics described above, i.e. a global path pattern match 34, a local path pattern match 36 and a "file name only" pattern match 38. For each report, numerical data 40 is provided together with a visual representation 42 in (for example) pie chart form. Other visual representations such as bar charts, column charts, bubble charts, or the like. The numerical data ideally Includes the total storage utilised, the estimated storage utilisation after deduplication, the projected savings, and the deduplication factor.

Thus, the database of backed-up files provides a useful way to estimate in advance the potential gains available via a deduplication process before committing to acquisition of the necessary software. Such a function could be provided as a stand-alone function or bundled into other storage management or analysis software.

It will of course be understood that many variations may be made to the above-described embodiment without departing from the scope of the present invention.

## Claims

1. A data management system comprising:
a database, populated with attribute data of files stored on an file system external to the data management system, including at least the file size;
a database engine adapted to process queries on the database;
a stored query arranged to locate files with matching attributes;
an estimator arranged to calculate a total size of duplicate files within the files with matching attributes.

2. A data management system according to claim 1, further comprising a backup engine arranged to inspect the file system, populate the database with the attribute data, and transfer at least a selection of the files to a backup location.

3. A data management system according to claim 1 or claim 2, wherein in addition to file size, the attribute data includes the file name.

4. A data management system according to claim 3, wherein the stored query locates files having matching file names.

5. A data management system according to claim 4 wherein the stored query locates files having file names that match exactly.

6. A data management system according to claim 4 wherein the stored query locates files having file names that match at least partially.

7. A data management system according to any one of the preceding claims wherein the stored query locates files with file sizes that do not match.

8. A data management system according to any one of the preceding claims, wherein in addition to file size, the attribute data includes the file location.

9. A data management system according to any one of the preceding claims, wherein for each collection of files with matching attributes, the estimator calculates the sum of (i) the size of a base file within the collection and, (ii) for each other file in the collection, a difference between the size of the other file and the size of the base file.

10. A data management system according to claim 9 in which the attribute data includes a modification date of the files, and the base file is the file in the collection with the earliest modification date.

11. A data management system according to claim 9 in which the base file is the file in the collection with the smallest size.

12. A data management system according to any one of claims 9 to 11 in which the difference between the size of the other file and the size of the base file is rounded to substantially zero if the other file is smaller than the base file.
